# EUROPEAN PATENT APPLICATION

(11) **EP 4 570 133 A1**
(43) Date of publication of application: **18.06.2025**
(21) Application number: 24220352.9
(22) Date of filing: 16.12.2024
(51) Int. Cl.: A47C 23/00, A47C 27/045, A47C 27/06, A47C 27/07

(54) **ELASTIC MATTRESS**

(30) Priority: 14.12.2023 CN 202311720556
(71) Applicant: New-Tec Integration (Xiamen) Co., Ltd., Xiamen, Fujian 361100 (CN)
(72) Inventor: LENG, Luhao, Xiamen 361100 (CN)
(74) Representative: Verscht, Thomas Kurt Albert

(57) **Abstract**

An elastic mattress, it includes one or more elastic modules and one or more bottom layers disposed on a lower side of the one or more elastic modules, the one or more elastic modules comprises a plurality of pre-compressed springs; connecting members are disposed on middle parts of the pre-compressed springs, one or more lap joints are further provided, the middle parts on adjacent ones of the pre-compressed springs are connected together, the connecting members are connected to the one or more lap joints, the one or more lap joints are connected to the adjacent ones of the pre-compressed springs, and bottom surfaces of the pre-compressed springs are connected to the one or more bottom layers.

## Description

### RELATED APPLICATIONS

This application claims priority to Chinese patent application number 202311720556.3, filed on December 14, 2023. Chinese patent application number 202311720556.3 is incorporated herein by reference.

### FIELD OF THE DISCLOSURE

The present disclosure relates to the field of furniture, and in particular relates to an elastic mattress.

### BACKGROUND OF THE DISCLOSURE

Bed mattresses are essential furniture in beddings for human use in modern life. Elastic bed mattresses with a middle part having elastic components are becoming increasingly popular for relaxation during sleep especially with increasing pressure in human lives. A soft mattress, elastic components, and a base of the existing elastic mattresses, such as the bed mattresses, having the elastic components are usually integrated to form a whole structure, upper ends of springs are connected together, causing surrounding elastic components to be simultaneously stressed when a local stress is applied to the elastic mattress, so a range of the stress applied to the elastic components of the existing elastic mattresses cannot be adjusted following a body posture on the elastic mattress, and the stress applied to the elastic mattress cannot be adjusted according to a sleeping posture of a person to enable the elastic mattress to conform to a curve of a human body to be softer and more comfortable. At the same time, after a long-time of use, the elasticity of the springs may change, and bacteria and mites breed on the elastic mattress. An upper mattress layer and the base of the elastic mattress are integrated with the elastic components, so it is impossible to judge a usage state and a wear level of the bed mattress during usage and to clean and replace components of the elastic mattress, such as the upper mattress layer, the elastic components, and the base, according to the usage state and the wear level, so as to maintain comfort and softness of the elastic mattress.

### BRIEF SUMMARY OF THE DISCLOSURE

The main technical problem to be solved by the present disclosure is to provide an elastic mattress, a stress applied to springs can be adjusted according to a posture of a human body, allowing the elastic mattress to conform to a curve of the human body, thus enabling the elastic mattress to be more ergonomic, comfortable, and soft.

In order to solve the aforementioned technical problems, the present disclosure provides an elastic mattress, it comprises one or more elastic modules and one or more bottom layers disposed on a lower side of the one or more elastic modules, the one or more elastic modules comprises a plurality of pre-compressed springs; connecting members are disposed on middle parts of the pre-compressed springs, one or more lap joints are further provided, the middle parts on adjacent ones of the pre-compressed springs are connected together, the connecting members are connected to the one or more lap joints, the one or more lap joints are connected to the adjacent ones of the pre-compressed springs, and bottom surfaces of the pre-compressed springs are connected to the one or more bottom layers.

In some embodiments, the connecting members comprise connecting seats, the connecting seats comprise first connecting structures, the one or more lap joints comprise one or more second connecting structures, and the first connecting structures are connected to the one or more second connecting structures to realize a connection of the connecting members and the one or more lap joints.

In some embodiments, the connecting seats comprise insertion members as the first connecting structures, the one or more lap joints comprises one or more insertion sockets as the one or more second connecting structures, and a male-female connection of the insertion members and the one or more insertion sockets realizes the connection of the connecting members and the one or more lap joints.

In some embodiments, the connecting members comprise the connecting seats, the connecting seats comprise protrusions as the insertion members, the one or more lap joints comprises grooves as the one or more insertion sockets, and the protrusions are positioned at and cooperate with the grooves.

In some embodiments, the protrusions are evenly disposed on four sides of the connecting seats.

In some embodiments, the grooves are disposed on four sides of the one or more lap joints.

In some embodiments, the one or more lap joints comprise one or more fixed seats and knobs connected to four sides of the one or more fixed seats, the knobs comprises the grooves configured to be matched with the protrusions, the protrusions are buckled to the grooves, the protrusions are locked by rotating the knobs, so as to realize the connection of the connecting members and the one or more lap joints.

In some embodiments, the pre-compressed springs at an outer periphery of the one or more elastic modules are connected by the one or more lap joints or buckled to each other by the connecting members.

In some embodiments, a connecting member comprises two or more detachable connecting member assemblies buckled to a waist part of a pre-compressed spring.

In some embodiments, the two or more connecting member assemblies of the connecting member are buckled to each other.

In some embodiments, it further comprises one or more upper mattress layers, and the one or more upper mattress layers are disposed on an upper side of the one or more elastic modules or cover an upper side and a periphery of the one or more elastic modules.

In some embodiments, the one or more upper mattress layers are detachably connected to one or more outermost pre-compressed springs on the one or more elastic modules.

In some embodiments, a plurality of strips having pull buckles are disposed on a periphery of the one or more upper mattress layers, and the strips having pull buckles are buckled to lap joints or connecting members of peripheral pre-compressed springs of the one or more elastic modules.

In some embodiments, the one or more upper mattress layers are an integrated upper mattress layer or is formed by a combination of multiple of the one or more upper mattress layers with different softness and hardness.

In some embodiments, the one or more bottom layers are detachably spliced by a plurality of bottom layer units or are integrated structures.

In some embodiments, multiple of the one or more bottom layers are detachably spliced together to form a base for the one or more elastic modules.

In some embodiments, the plurality of bottom layer units or the multiple of the one or more bottom layers are connected together through third members.

In some embodiments, a third member is a connecting knob, a bottom of the connecting knob comprise a symmetrical T-shaped buckling pin, peripheries of the bottom layer units or the one or more bottom layers comprise sliding rails connected to the T-shaped buckling pin, and widths of the sliding rails narrow along a rotation direction of the connecting knob; the connecting knob is buckled to wide parts of the sliding rails on two adjacent ones of the bottom layer units or the one or more bottom layers, and the connecting knob rotates to enable the T-shaped buckling pin to be positioned at narrow parts of the sliding rails to achieve a connection of the two adjacent ones of the bottom layer units or the one or more bottom layers.

In some embodiments, the pre-compressed springs are connected to the one or more bottom layers through fixing members.

In some embodiments, at least part of the one or more bottom layers is disposed with the fixing members.

In some embodiments, the fixing members are positioning protrusions disposed on the bottom layer units, lower end surfaces of the pre-compressed springs comprise cavities configured to be positioned at and cooperate with the positioning protrusions, and the pre-compressed springs are connected to the one or more bottom layers by a male-female connection between the positioning protrusions and the cavities.

In some embodiments, the one or more bottom layers are formed by one or more rigid substrates or one or more flexible substrates.

In some embodiments, the pre-compressed springs are configured to be compressed to a locked state.

In some embodiments, the pre-compressed springs comprise top covers and bottom covers, springs are disposed between the top covers and the bottom covers, positioning structures are disposed between the top covers and the bottom covers, and the top covers are buckled to the bottom covers through the positioning structures to compress the pre-compressed springs to the locked state.

In some embodiments, first positioning structure are disposed on lower end surfaces of the top covers, second positioning structures are disposed on upper end surfaces of the bottom covers, and the first positioning structures are detachably buckled to the second positioning structures; the first positioning structures and the second positioning structures are buckled to each other to compress the pre-compressed springs and are detached from each other to release the pre-compressed springs.

In some embodiments, lower end surfaces of the bottom covers of the pre-compressed springs comprise cavities, and the bottom covers define top surfaces of the cavities.

In some embodiments, the second positioning structures are flanges disposed on the top surfaces of the cavities, and the flanges are discontinuous.

The present disclosure further provides an application of the elastic mattress, it comprises applying the elastic mattress in a sofa, a bed mattress, or a soft stool.

Compared with the existing techniques, the present disclosure has the following advantages.

1. In the elastic mattress of the present disclosure, upper ends of the pre-compressed springs for forming the one or more elastic modules are independent, so that a stress applied to the springs of the elastic mattress can conform to a curve of a human body according to a posture of the human body to enable the elastic mattress to be softer and more comfortable.

2. In the elastic mattress of the present disclosure, the one or more upper mattress layers are detachably connected to the one or more elastic modules and are disposed on an upper side of the one or more elastic modules, and a usage state of the elastic mattress can be judged in a utilization process to be cleaned and replaced in time.

3. In the elastic mattress of the present disclosure, the pre-compressed springs can be compressed to the locked state, in transportation or relocation of the elastic mattress, the detached pre-compressed springs can be compressed to save transportation space and to facilitate the relocation.

### BRIEF DESCRIPTION OF THE DRAWINGS

FIG. 1 is a diagrammatic view of an elastic mattress in Embodiment 1;
FIG. 2 is a diagrammatic view of a pre-compressed spring in Embodiment 1;
FIG. 3 is a diagrammatic view of a connecting member in Embodiment 1.
FIG. 4 is a diagrammatic view of a lap joint in Embodiment 1;
FIG. 5 is a diagrammatic view of a connection relation in Embodiment 1;
FIG. 6 is a view of a virtual object of an elastic module in Embodiment 1;
FIG. 7 is a diagrammatic view of a virtual object of a protrusion being buckled to the lap joint in Embodiment 1;
FIG. 8 is a diagrammatic view of a virtual object of the protrusion being locked by the lap joint in Embodiment 1;
FIG. 9 is a diagrammatic view of a virtual object of the connection relation in Embodiment 1;
FIG. 10 is a diagrammatic view of a strip having a pull buckle connected to the elastic module in Embodiment 1;
FIG. 11 is a diagrammatic view of the strip having the pull buckle and a three-way lap joint in Embodiment 1;
Figure 12 shows a diagrammatic view of a connection of outermost pre-compressed springs of the elastic mattress in Embodiment 1;
FIG. 13 is a diagrammatic view of a virtual object of the strip having the pull buckle connected to the elastic module in Embodiment 1;
FIG. 14 is a diagrammatic view of the elastic module connected to a base;
FIG. 15 is a diagrammatic view of the base spliced by 8-seat bottom layer units;
FIG. 16 is a partial view of the base in which positioning protrusions are disposed on all of a bottom layer;
FIG. 17 is a partial view of the base in which the positioning protrusions are disposed on a periphery of the bottom layer;
FIG. 18 is a diagrammatic view of a positioning protrusion;
FIG. 19 is a diagrammatic view of a connecting knob;
FIG. 20 is a diagrammatic view of the base spliced by 5-seat bottom layer units;
FIG. 21 is a diagrammatic view of the base spliced by 5-seat and 1-seat bottom layer units;
FIG. 22 is a diagrammatic view of a 5-seat bottom layer unit;
FIG. 23 is a diagrammatic view of an 8-seat bottom layer unit;
FIG. 24 is a diagrammatic view of a 3-seat bottom layer unit;
FIG. 25 is a diagrammatic view of a 1-seat bottom layer unit;
FIG. 26 is a view of a virtual object of the base;
FIG. 27 is a view of a virtual object of the base in a disassembled state;
FIG. 28 is a diagrammatic view of the pre-compressed spring in a released state; and
FIG. 29 is a diagrammatic view of the pre-compressed spring in a compressed state;
FIG. 30 is a diagrammatic view of another elastic mattress in Embodiment 1;
FIG. 31 is a diagrammatic view of the another elastic module connected to a base;
FIG. 32 is a diagrammatic view of the base; and
FIG. 33 is a diagrammatic view of the base in a disassembled state.

### DETAILED DESCRIPTION OF THE EMBODIMENTS

The technical solutions in the embodiments of the present disclosure will be clearly and completely described below in combination with the accompanying drawings in the embodiments of the present disclosure. It is obvious that the described embodiments are preferred embodiments of the present disclosure and should not be understood as an exclusion of other embodiments. All other embodiments fall within the protection scope of the present disclosure provided that they are obtained by a person of ordinary technical skill in the art based on the embodiments of the present disclosure without creative works.

### EMBODIMENT 1

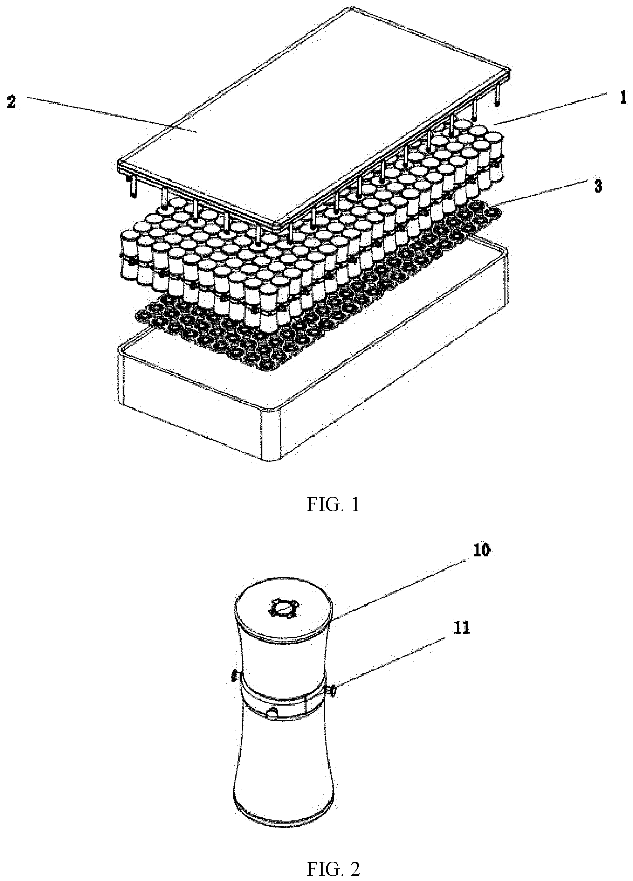

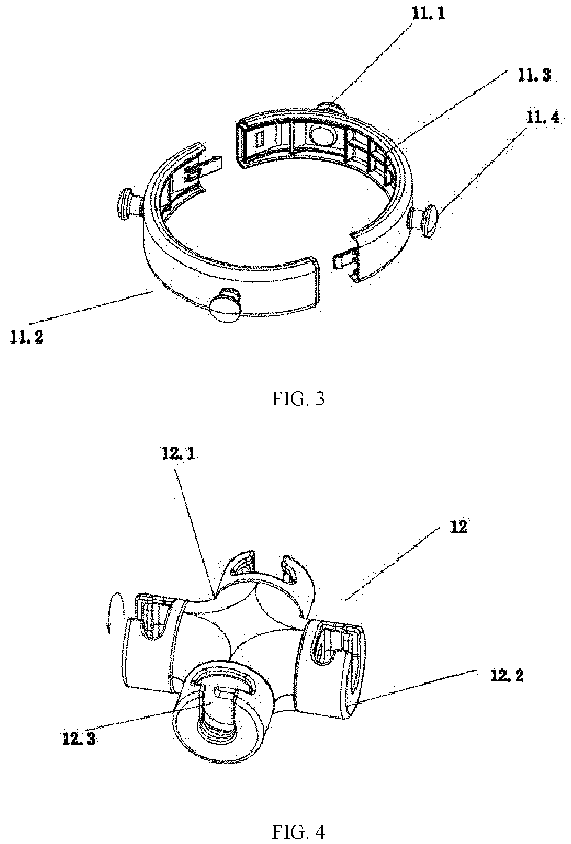

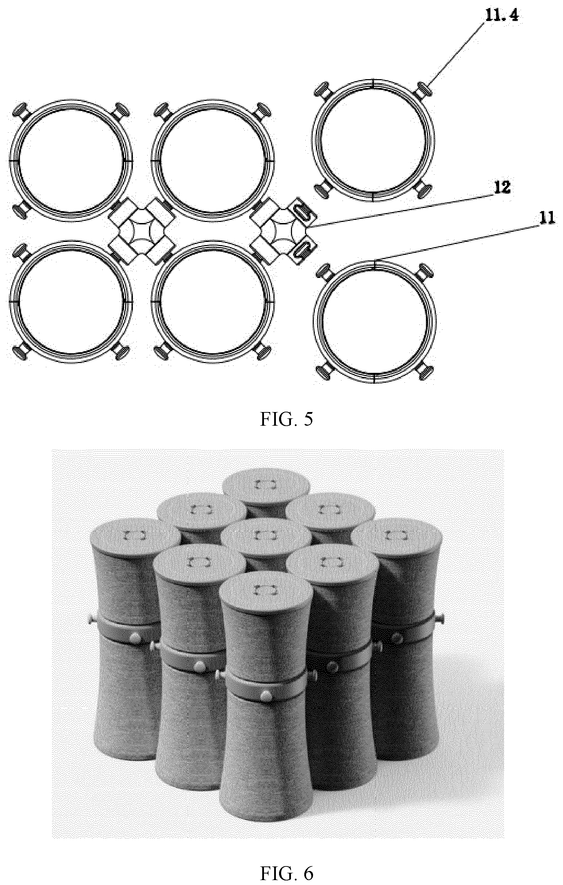

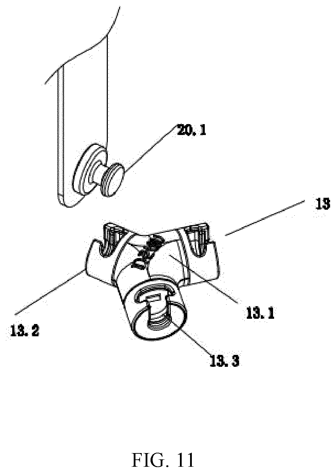

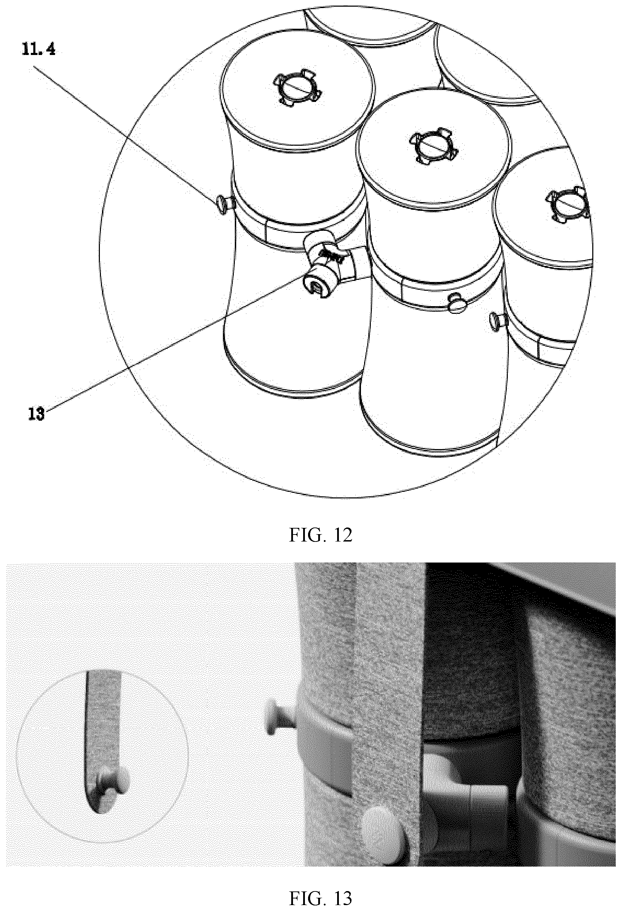

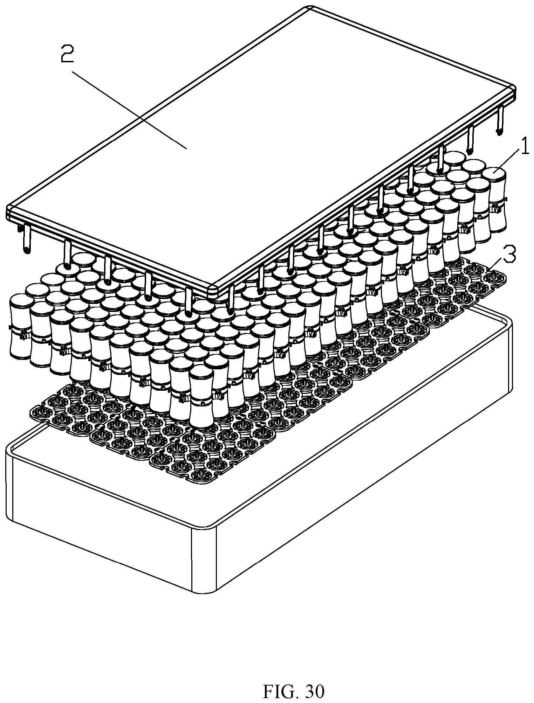

Referring to FIGS. 1-13 and FIG 30: this embodiment provides an elastic mattress, which comprises a plurality of elastic modules 1, one or more upper mattress layers 2 disposed on an upper side of the elastic modules 1, and one or more bottom layers 3 disposed on a lower side of the elastic modules 1 and configured to be connected to pre-compressed springs 10, and the elastic modules 1 comprises the plurality of pre-compressed springs 10; middle parts (i.e., waist parts) of the pre-compressed springs 10 comprise connecting members 11 (e.g., a middle part of a pre-compressed spring 10 comprises a connecting member), it further comprises one or more lap joints 12, the middle parts on adjacent ones of the pre-compressed springs 10 are connected together, the connecting members 11 are connected to the one or more lap joints 12, and the one or more lap joints 12 are connected to the adjacent ones of the pre-compressed springs 10.

More specifically, in this embodiment, the connecting member 11 is divided into two detachable connecting member assemblies 11.1 and 11.2 buckled to each other to form a ring shape so as to be buckled to a waist part of the pre-compressed spring 10. The connecting member 11 comprises a connecting seat 11.3, four sides of the connecting seat 11.3 evenly comprise T-shaped protrusions 11.4 as insertion members, and the T-shaped protrusions 11.4 on different one of the pre-compressed springs 10 are connected by the one or more lap joints 12 to realize a connection of the adjacent ones of pre-compressed springs 10.

A lap joint 12 in this embodiment comprises a fixed seat 12.1 and knobs 12.2 connected to four sides of the fixed seat, and four of the knobs 12.2 comprise grooves 12.3 configured to be positioned at and cooperate with the T-shaped protrusions 11.4 as insertion sockets. The knobs 12.2 are configured to rotate around the grooves 12.3. The T-shaped protrusions 11.4 of the connecting members of the pre-compressed springs are buckled to the grooves 12.3 of the knobs of the one or more lap joints, at this time, the T-shaped protrusions 11.4 can be positioned at and cooperate with the grooves in a horizontal direction, the knobs 12.2 rotate until the T-shaped protrusions 11.4 are positioned at and cooperate with the knobs 12.2 in a vertical direction, and at this time, the T-shaped protrusions 11.4 are locked by the knobs 12.2 to realize a connection of the pre-compressed springs 10.

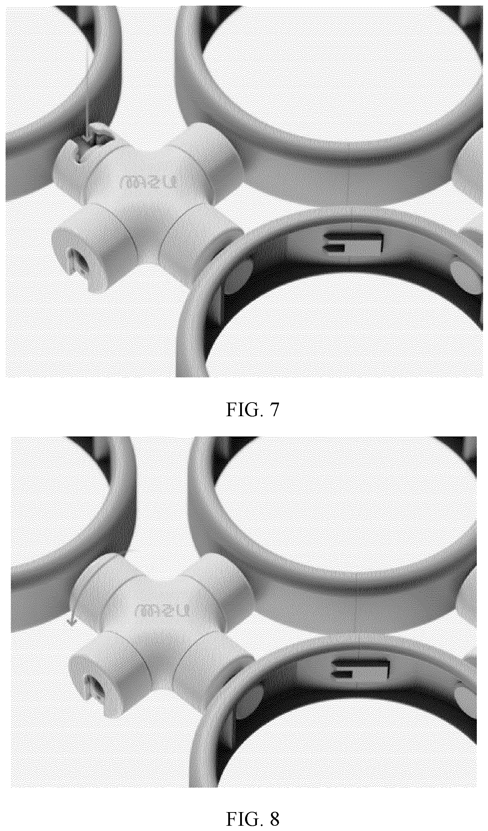

When the pre-compressed springs 10 are connected together, the T-shaped protrusions 11.4 are buckled to the grooves 12.3 of the one or more lap joints 12, at this time, as shown in FIG. 7, the T-shaped protrusions 11.4 are positioned at and cooperate with the grooves 12.3 in the horizontal direction. As shown in FIG. 8, the knobs 12.2 rotate until the knobs 12.2 are positioned at and cooperate with the T-shaped protrusions 11.4 in the vertical direction, and the T-shaped protrusions 11.4 are locked by rotating the knobs 12.2 to realize the connection of the adjacent ones of the pre-compressed springs 10. When the pre-compressed springs 10 are disassembled, the knobs 12.2 rotate to release a positioning cooperation with the T-shaped protrusions 11.4 in the vertical direction, and the T-shaped protrusions 11.4 are removed to release the connection of the adjacent ones of pre-compressed springs 10.

In this embodiment, each of the one or more lap joints 12 comprises the four of the knobs 12.2, and each of the one or more lap joints 12 can be connected to the connecting members 11 on four of the pre-compressed springs 10. The others of the T-shaped protrusions 11.4 of the connecting members on the four of the pre-compressed springs are connected to other ones of the one or more lap joints 12, and so on, and the pre-compressed springs 10 are connected together to form the elastic modules 1.

In this embodiment, one or more outermost pre-compressed springs 10 on an elastic module 1 and one or more outermost pre-compressed springs 10 on another elastic module 1 can be connected using the one or more lap joints 12. As a simple alternative to this embodiment, the one or more outermost pre-compressed springs 10 on the elastic module 1 and the one or more outermost pre-compressed springs 10 on another elastic module 1 can also be buckled to each other by the connecting members.

In order to judge a usage state and cleanliness of the elastic mattress during use and to clean the elastic mattress or replace parts in time according to the usage state, in this embodiment, the one or more upper mattress layers 2 are disposed on an upper side of the elastic modules 1 and the pre-compressed springs 10 are exposed to an external side, thereby enabling the elastic mattress to be an open structure and allowing the user to judge the cleanliness of the elastic mattress and wear level of the springs in time through naked eyes during use.

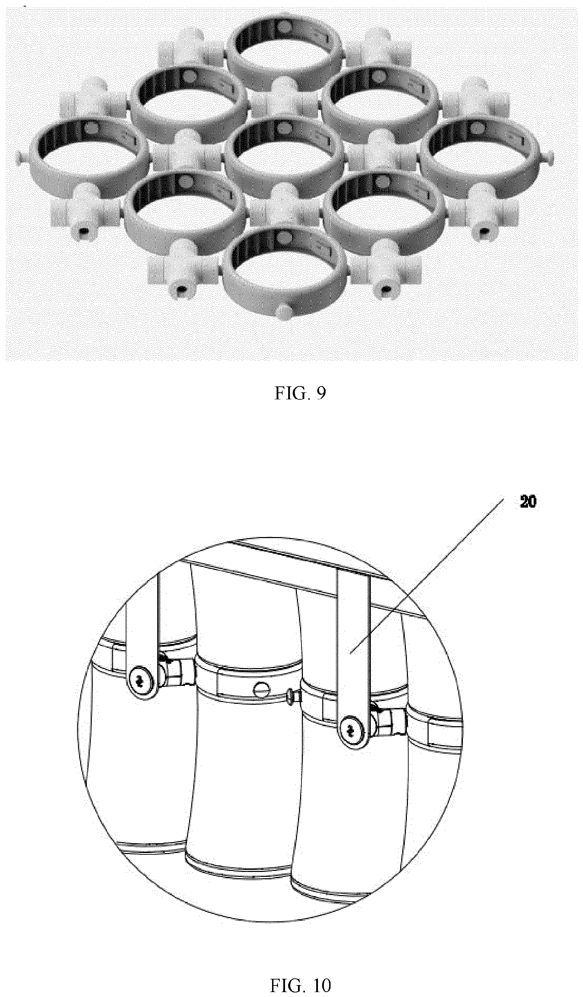

In order to facilitate the user cleaning the elastic mattress and replacing the parts, as shown in FIGS. 10-13, in this embodiment, strips 20 having pull buckles are disposed on a periphery of the one or more upper mattress layers 2, and the strips 20 having pull buckles are buckled to the one or more lap joints 12 connected to the one or more outermost pre-compressed springs of the elastic mattress to achieve a detachable connection of the one or more upper mattress layers 2 and the elastic modules 1.

In this embodiment, the one or more outermost pre-compressed springs 10 of the elastic mattress do not need to be connected to another elastic module 1, so that adjacent ones of the one or more outermost pre-compressed springs 10 of the elastic mattress and a strip 20 having a pull buckle of the one or more upper mattress layers 2 are connected together by a three-way lap joint 13, the lap joint 13 comprises a fixed seat 13.1 and three knobs 13.2 identical to the knobs 12.2, the knobs 13.2 comprise grooves 13.3, the T-shaped protrusions 11.4 on the adjacent ones of the one or more outermost pre-compressed springs 10 of the elastic mattress and a T-shaped protrusion 20.1 of the strip having the pull buckle are respectively buckled to the three grooves 13.3 of the three-way lap joint 13, and the knobs 13.2 rotate to lock the T-shaped protrusion 20.1 to realize a fixed connection of the one or more outermost pre-compressed springs 10 of the elastic mattress and to secure the one or more upper mattress layers 2 with the elastic modules 1. As a simple alternative to this embodiment, the strips 20 having pull buckles can also comprise grooves for a direct connection with the protrusions of the connecting members.

In this embodiment, according to different needs of the user for softness of the elastic mattress, the one or more upper mattress layers 2 consist of a plurality of upper mattress layers with different softness or hardness. The user can combine upper mattress layers having appropriate hardness to form one or more suitable upper mattress layers 2 according to actual needs and preferences for softness of the one or more upper mattress layers. A surface of the one or more upper mattress layers 2 can also use leather, ultrafine fiber, cotton, wool, or other materials. As a simple alternative of this embodiment, the one or more upper mattress layers 2 can also be an integrated structure.

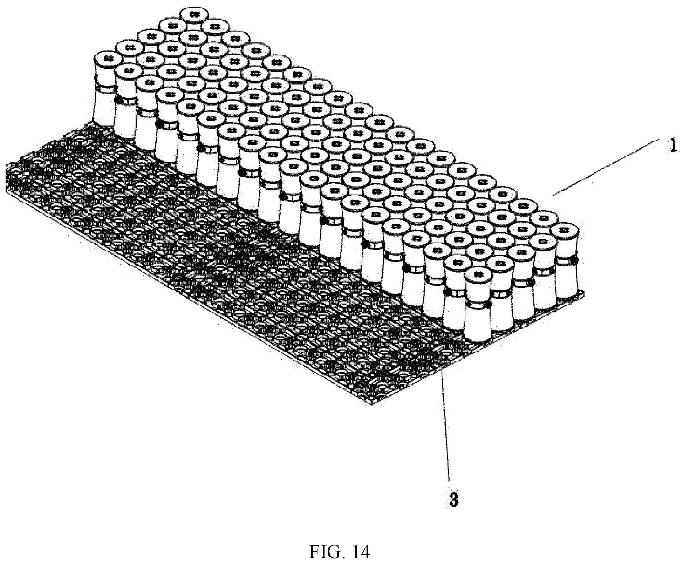

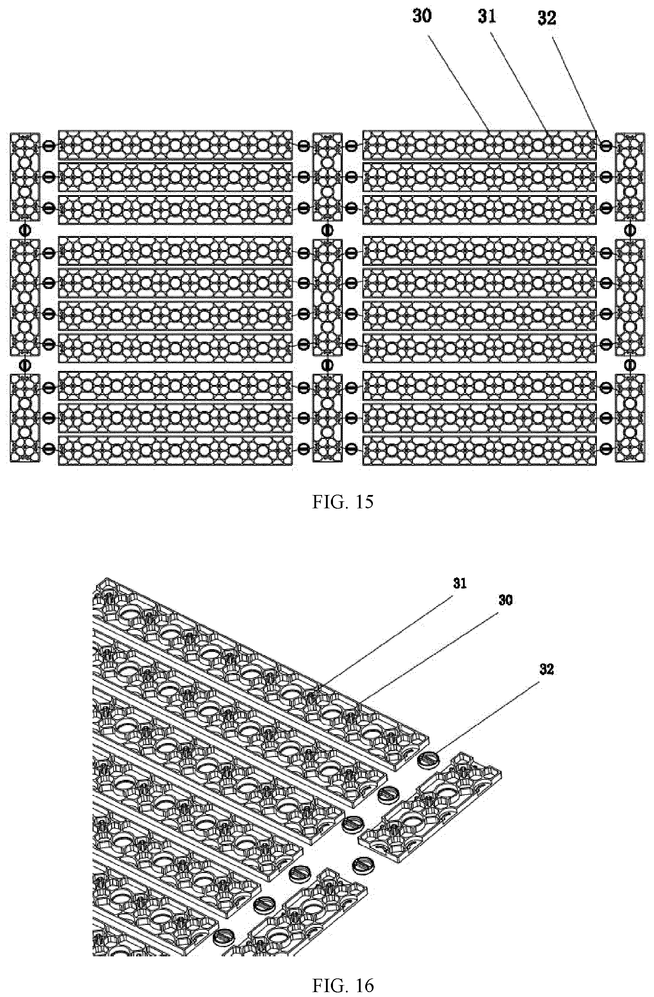

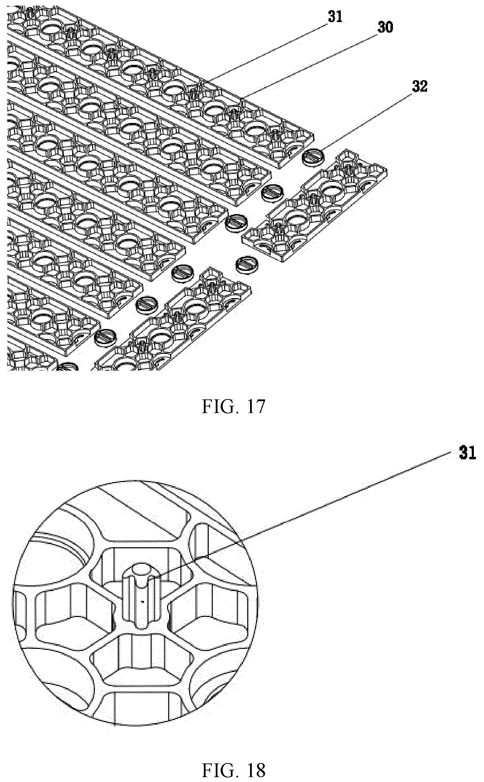

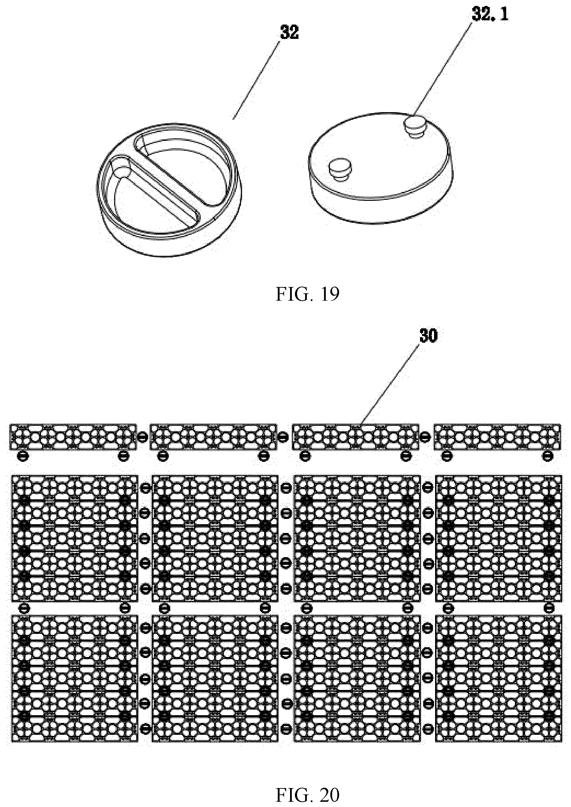

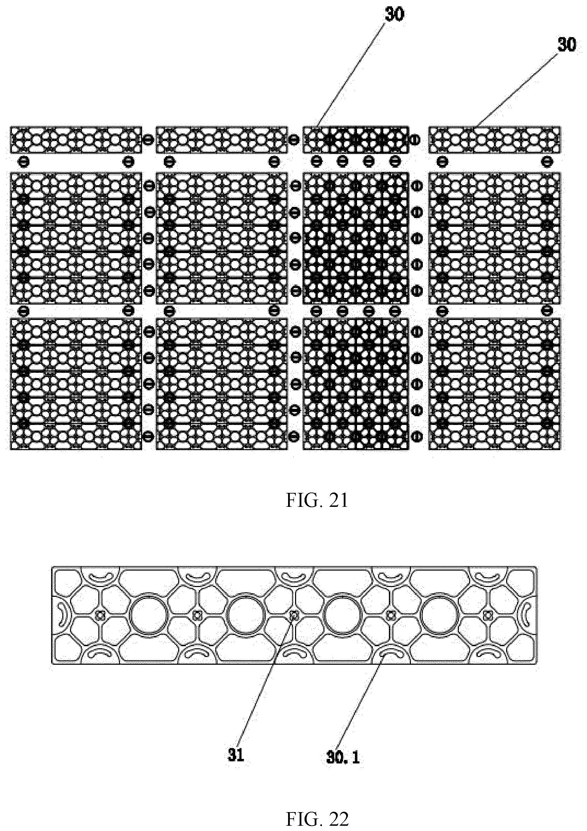

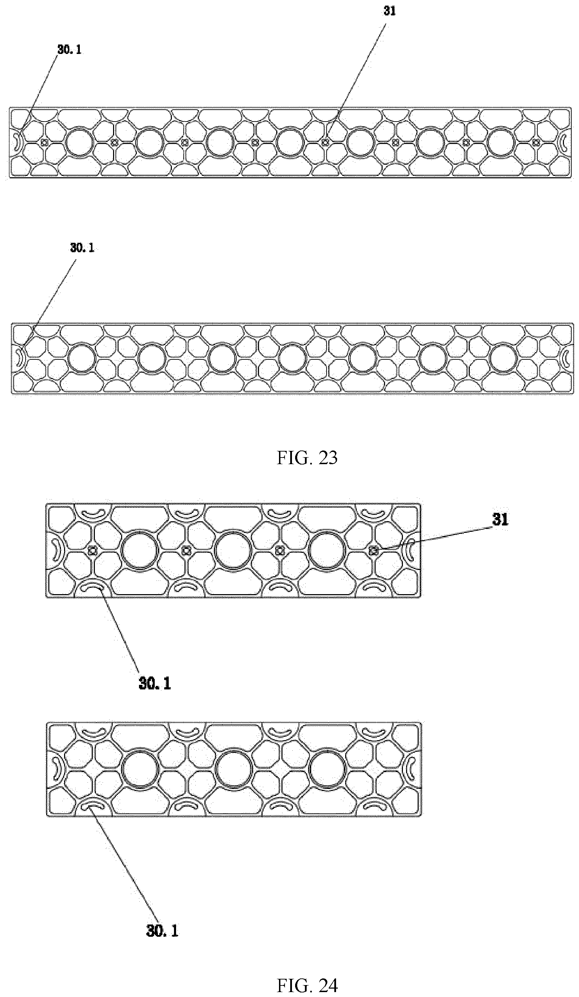

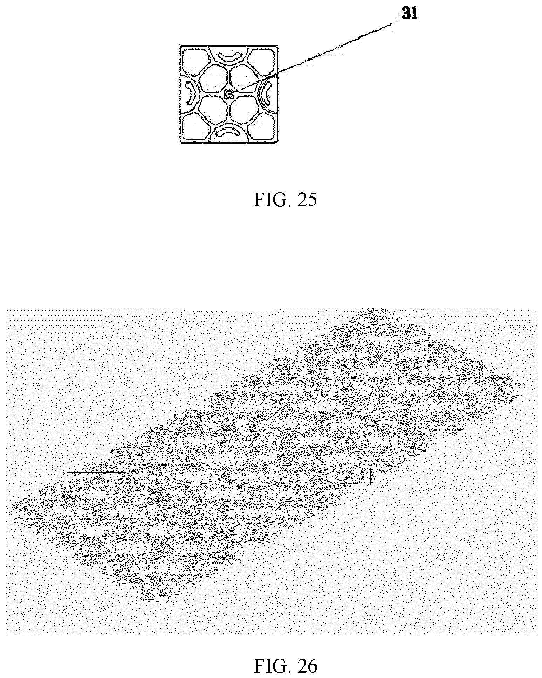

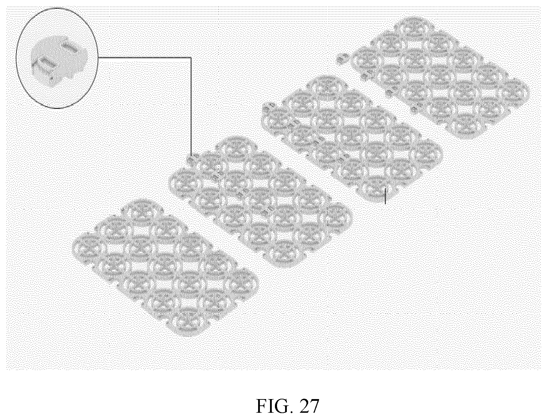

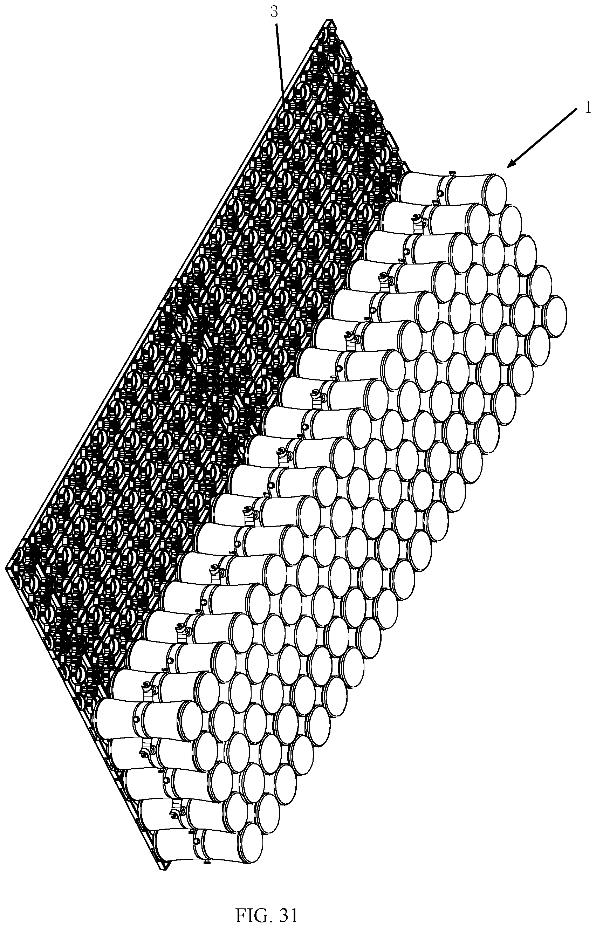

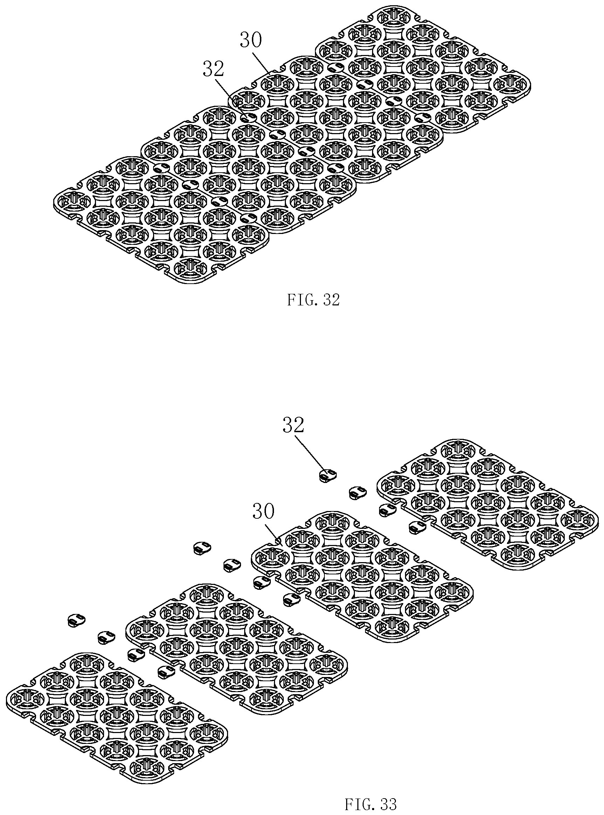

Referring to FIGS. 14-27 and 31-33, in this embodiment, the one or more bottom layers 3 are spliced by a plurality of bottom layer units 30, in order to enable the pre-compressed springs 10 to be connected to the one or more bottom layers 3, the one or more bottom layers 3 comprise positioning protrusions 31 as fixing members, and lower end surfaces of the pre-compressed springs 10 comprise cavities 102.2 positioned at and cooperating with the positioning protrusions and are connected to the one or more bottom layers 3 using a male-female connection of the positioning protrusions 31 and the cavities 102.2.

The one or more bottom layers 3 form sizes as the elastic modules 1 by splicing the plurality of bottom layer units 30 together through connecting knobs 32 to match. A connecting knob 32 is a circular knob in which a bottom comprises two T-shaped buckling pins 32.1 symmetrical to each other. Edges of the bottom layer units 30 comprise sliding rails 30.1 configured to be positioned at and cooperate with the T-shaped buckling pins 32.1 of the connecting knob 32, widths of the sliding rails 30.1 narrow along a rotation direction of the connecting knob, allowing the two T-shaped buckling pins 32.1 of the connecting knob 32 to be respectively buckled to wide parts of sliding rails 30.1 of two adjacent ones of the bottom layer units 30, a handle on the connecting knob 32 is griped to enable the connecting knob 32 to rotate until the buckling pins 32.1 are positioned at narrow parts of the sliding rails 30.1, and a connection of the adjacent ones of the bottom layer units 30 is achieved.

As a simple alternative of this embodiment, the one or more bottom layers 3 can also be an integrated structure to match the sizes of the elastic modules 1, at the same time, the pre-compressed springs 10 are connected together in the elastic modules 1, so that the positioning protrusions 31 can be located only on bottom layer units 30 on a periphery of the one or more bottom layers 3.

In this embodiment, the elastic mattress is spliced by the plurality of elastic modules 1, a plurality of bottom layers 3 connected to the pre-compressed springs 10 are detachably connected to form a base for connecting the elastic modules 1 using the connecting knobs 32, so that a specific number of the elastic modules 1 and the one or more bottom layers 3 that are detachably connected together are spliced together to form the elastic mattress according to actual size requirements of the user.

Sizes of the bottom layer units 30 can be set arbitrarily, a bottom layer unit 30 can be connected to one of the pre-compressed springs 10 or connected to the plurality of pre-compressed springs 10, the one or more bottom layers 3 can be formed by splicing the bottom layer units 30 with different sizes together through the connecting knobs 32, or by splicing the bottom layer units 30 with same sizes together through the connecting knobs 32. As a simple alternative of this embodiment, the bottom layer units 30 and the bottom layers 3 can also be detachably connected together using a plug-in connection, a hinge, etc.

Specifically, the bottom layers 3 can be formed by splicing a plurality of 8-seat bottom layer units 30 and 4-seat bottom layer units 30 together, or by splicing a plurality of 5-seat bottom layer units 30 together, or by splicing a plurality of 1-seat bottom layer units 30 and a plurality of 5-seat bottom layer units 30 together. A seat number of the bottom layer units 30 and a combination for splicing are not limited to the description mentioned in this embodiment.

In this embodiment, the bottom layers 3 connected to the pre-compressed springs 10 are formed by a rigid substrate, and the rigid substrate can be formed by a rigid material, such as a wood board, a vacuum-formed plastic board, etc. As a simple alternative of this embodiment, the bottom layers 3 can also be formed by a flexible substrate.

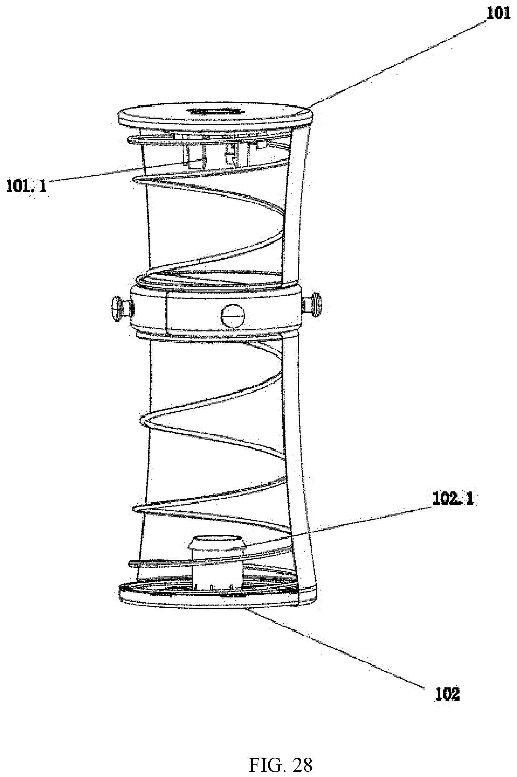

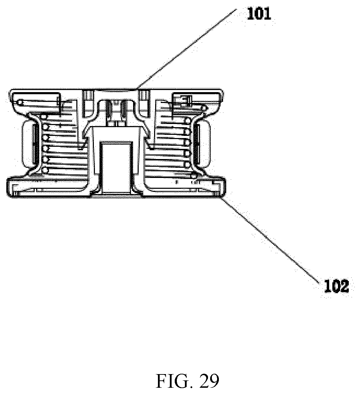

Referring to FIGS. 28-29, in this embodiment, in order to facilitate transportation or relocation of the elastic mattress after disassembly, the pre-compressed springs can be compressed to a locked state, a height of the springs compressed to the locked state is greatly reduced, and occupied space is reduced to facilitate the transportation and the relocation. More specifically, the pre-compressed spring 10 comprises a top cover 101 and a bottom cover 102, the top cover 101 comprises a first positioning structure 101.1, the bottom cover 102 comprises a second positioning structure 102.1, and the first positioning structure 101.1 is detachably buckled to the second positioning structure 102.1; a lower end surface of the bottom cover 102 of the pre-compressed spring 10 comprises a cavity 102.2 positioned at and cooperating with the positioning protrusion, the bottom cover 102 defines a top surface of the cavity 102.2, and the second positioning structure 102.1 is discontinuous and is flanges disposed on an outer periphery of an upper end of the cavity 102.2 of the pre-compressed spring; the pre-compressed spring 10 is compressed using an external force to enable hooks of the first positioning structure 101.1 and the flanges of the second positioning structure 102.1 to be buckled together, thereby achieving a compression of the pre-compressed spring 10, the external force can then be used to enable the pre-compressed spring 10 to rotate to enable the first positioning structure 101.1 to rotate to be separated from the second positioning structure 102.1 to achieve releasing of the pre-compressed spring.

The invention may be summarized as follows: An elastic mattress, it includes one or more elastic modules and one or more bottom layers disposed on a lower side of the one or more elastic modules, the one or more elastic modules comprises a plurality of pre-compressed springs; connecting members are disposed on middle parts of the pre-compressed springs, one or more lap joints are further provided, the middle parts on adjacent ones of the pre-compressed springs are connected together, the connecting members are connected to the one or more lap joints, the one or more lap joints are connected to the adjacent ones of the pre-compressed springs, and bottom surfaces of the pre-compressed springs are connected to the one or more bottom layers.

The invention may also be summarized as follows:
1. An elastic mattress, it comprises one or more elastic modules and one or more bottom layers disposed on a lower side of the one or more elastic modules, characterized in that, the one or more elastic modules comprises a plurality of pre-compressed springs; connecting members are disposed on middle parts of the pre-compressed springs, it further comprises one or more lap joints, the middle parts on adjacent ones of the pre-compressed springs are connected together, the connecting members are connected to the one or more lap joints, the one or more lap joints are connected to the adjacent ones of the pre-compressed springs, and bottom surfaces of the pre-compressed springs are connected to the one or more bottom layers.
2. The elastic mattress according to item 1, characterized in that, the connecting members comprise connecting seats, the connecting seats comprise first connecting structures, the one or more lap joints comprise one or more second connecting structures, and the first connecting structures are connected to the one or more second connecting structures to realize a connection of the connecting members and the one or more lap joints.
3. The elastic mattress according to item 2, characterized in that, the connecting seats comprise insertion members as the first connecting structures, the one or more lap joints comprises one or more insertion sockets as the one or more second connecting structures, and a male-female connection of the insertion members and the one or more insertion sockets realizes the connection of the connecting members and the one or more lap joints.
4. The elastic mattress according to item 3, characterized in that, the connecting members comprise the connecting seats, the connecting seats comprise protrusions as the insertion members, the one or more lap joints comprises grooves as the one or more insertion sockets, and the protrusions are positioned at and cooperate with the grooves.
5. The elastic mattress according to item 4, characterized in that, the protrusions are evenly disposed on four sides of the connecting seats.
6. The elastic mattress according to item 4 and/or 5, characterized in that, the grooves are disposed on four sides of the one or more lap joints.
7. The elastic mattress according to any one or more of items 4 to 6, characterized in that, the one or more lap joints comprise one or more fixed seats and knobs connected to four sides of the one or more fixed seats, the knobs comprises the grooves configured to be matched with the protrusions, the protrusions are buckled to the grooves, the protrusions are locked by rotating the knobs, so as to realize the connection of the connecting members and the one or more lap joints.
8. The elastic mattress according to any one or more of items 1 to 7, characterized in that, the pre-compressed springs at an outer periphery of the one or more elastic modules are connected by the one or more lap joints or buckled to each other by the connecting members.
9. The elastic mattress according to any one or more of items 1 to 8, characterized in that, a connecting member comprises two or more detachable connecting member assemblies buckled to a waist part of a pre-compressed spring.
10. The elastic mattress according to item 9, characterized in that, the two or more connecting member assemblies of the connecting member are buckled to each other.
11. The elastic mattress according to any one or more of items 1-10, characterized in that, it further comprises one or more upper mattress layers, and the one or more upper mattress layers are disposed on an upper side of the one or more elastic modules or cover an upper side and a periphery of the one or more elastic modules.
12. The elastic mattress according to item 11, characterized in that, the one or more upper mattress layers are detachably connected to one or more outermost pre-compressed springs on the one or more elastic modules.
13. The elastic mattress according to item 11 and/or 12, characterized in that, a plurality of strips having pull buckles are disposed on a periphery of the one or more upper mattress layers, and the strips having pull buckles are buckled to lap joints or connecting members of peripheral pre-compressed springs of the one or more elastic modules.
14. The elastic mattress according to any one or more of items 11 to 13, characterized in that, the one or more upper mattress layers are an integrated upper mattress layer or are formed by a combination of multiple of the one or more upper mattress layers with different softness and hardness.
15. The elastic mattress according to any one or more of items 1 to 14, characterized in that, the one or more bottom layers are detachably spliced by a plurality of bottom layer units or are integrated structures.
16. The elastic mattress according to any one or more of items 1 to 15, characterized in that: multiple of the one or more bottom layers are detachably spliced together to form a base for the one or more elastic modules.
17. The elastic mattress according to any one or more of items 1 to 16, characterized in that, the plurality of bottom layer units or the multiple of the one or more bottom layers are connected together through third members.
18. The elastic mattress according to item 17, characterized in that, a third member is a connecting knob, a bottom of the connecting knob comprise a symmetrical T-shaped buckling pin, peripheries of the one or more bottom layer units or the bottom layers comprise sliding rails connected to the T-shaped buckling pin, and widths of the sliding rails narrow along a rotation direction of the connecting knob; the connecting knob is buckled to wide parts of the sliding rails on two adjacent ones of the bottom layer units or the one or more bottom layers, and the connecting knob rotates to enable the T-shaped buckling pin to be positioned at narrow parts of the sliding rails to achieve a connection of the two adjacent ones of the bottom layer units or the one or more bottom layers.
19. The elastic mattress according to any one or more of items 1 to 18, in particular of item 15, characterized in that, the pre-compressed springs are connected to the one or more bottom layers through fixing members.
20. The elastic mattress according to item 19, characterized in that: at least part of the one or more bottom layers is disposed with the fixing members.
21. The elastic mattress according to item 19 and/or 20, characterized in that, the fixing members are positioning protrusions disposed on the bottom layer units, lower end surfaces of the pre-compressed springs comprise cavities configured to be positioned at and cooperate with the positioning protrusions, and the pre-compressed springs are connected to the one or more bottom layers by a male-female connection between the positioning protrusions and the cavities.
22. The elastic mattress according to any one or more of items 1 to 21, in particular of item 15, characterized in that, the one or more bottom layers are formed by one or more rigid substrates or one or more flexible substrates.
23. The elastic mattress according to any one or more of items 1 to 22, characterized in that, the pre-compressed springs are configured to be compressed to a locked state.
24. The elastic mattress according to any one or more of items 1 to 23, characterized in that, the pre-compressed springs comprise top covers and bottom covers, springs are disposed between the top covers and the bottom covers, positioning structures are disposed between the top covers and the bottom covers, and the top covers are buckled to the bottom covers through the positioning structures to compress the pre-compressed springs to the locked state.
25. The elastic mattress according to item 24, characterized in that, first positioning structure are disposed on lower end surfaces of the top covers, second positioning structures are disposed on upper end surfaces of the bottom covers, and the first positioning structures are detachably buckled to the second positioning structures; the first positioning structures and the second positioning structures are buckled to each other to compress the pre-compressed springs and are detached from each other to release the pre-compressed springs.
26. The elastic mattress according to item 24 and/or 25, characterized in that, lower end surfaces of the bottom covers of the pre-compressed springs comprise cavities, and the bottom covers define top surfaces of the cavities.
27. The elastic mattress according to item 25 and/or 26, characterized in that, the second positioning structures are flanges disposed on the top surfaces of the cavities, and the flanges are discontinuous.
28. An application of the elastic mattress, characterized in that, applying the elastic mattress according to any one or more of items 1-27 in a sofa, a bed mattress, or a soft stool.

The aforementioned description of the specification and the embodiments is used to explain the protection scope of the present disclosure instead of a limitation of the protection scope of the present disclosure. Modifications, equivalent substitutions or other improvements of the embodiments or some technical features thereof of the present disclosure fall within the protection scope of the present disclosure provided that they are obtained by a person of ordinary technical skill in the art through logical analysis, reasoning, or limited experiments by combining common knowledge with ordinary technical knowledge in the art and/or the existing techniques through the hint of the present disclosure or the aforementioned embodiments.

## Claims

1. An elastic mattress, it comprises one or more elastic modules and one or more bottom layers disposed on a lower side of the one or more elastic modules, **characterized in that**, the one or more elastic modules comprises a plurality of pre-compressed springs; connecting members are disposed on middle parts of the pre-compressed springs, it further comprises one or more lap joints, the middle parts on adjacent ones of the pre-compressed springs are connected together, the connecting members are connected to the one or more lap joints, the one or more lap joints are connected to the adjacent ones of the pre-compressed springs, and bottom surfaces of the pre-compressed springs are connected to the one or more bottom layers.

2. The elastic mattress according to claim 1, **characterized in that**, the connecting members comprise connecting seats, the connecting seats comprise first connecting structures, the one or more lap joints comprise one or more second connecting structures, and the first connecting structures are connected to the one or more second connecting structures to realize a connection of the connecting members and the one or more lap joints.

3. The elastic mattress according to claim 2, **characterized in that**, the connecting seats comprise insertion members as the first connecting structures, the one or more lap joints comprises one or more insertion sockets as the one or more second connecting structures, and a male-female connection of the insertion members and the one or more insertion sockets realizes the connection of the connecting members and the one or more lap joints.

4. The elastic mattress according to claim 3, **characterized in that**, the connecting members comprise the connecting seats, the connecting seats comprise protrusions as the insertion members, the one or more lap joints comprises grooves as the one or more insertion sockets, and the protrusions are positioned at and cooperate with the grooves.

5. The elastic mattress according to claim 4, **characterized in that**, the protrusions are evenly disposed on four sides of the connecting seats, wherein preferably the grooves are disposed on four sides of the one or more lap joints.

6. The elastic mattress according to claim 4 and/or 5, **characterized in that**, the one or more lap joints comprise one or more fixed seats and knobs connected to four sides of the one or more fixed seats, the knobs comprises the grooves configured to be matched with the protrusions, the protrusions are buckled to the grooves, the protrusions are locked by rotating the knobs, so as to realize the connection of the connecting members and the one or more lap joints.

7. The elastic mattress according to any one or more of claims 1 to 6, **characterized in that**, the pre-compressed springs at an outer periphery of the one or more elastic modules are connected by the one or more lap joints or buckled to each other by the connecting members.

8. The elastic mattress according to any one or more of claims 1 to 7, **characterized in that**, a connecting member comprises two or more detachable connecting member assemblies buckled to a waist part of a pre-compressed spring, wherein preferably the two or more connecting member assemblies of the connecting member are buckled to each other.

9. The elastic mattress according to any one or more of claims 1-8, **characterized in that**, it further comprises one or more upper mattress layers, and the one or more upper mattress layers are disposed on an upper side of the one or more elastic modules or cover an upper side and a periphery of the one or more elastic modules.

10. The elastic mattress according to claim 9, **characterized in that**, the one or more upper mattress layers are detachably connected to one or more outermost pre-compressed springs on the one or more elastic modules.

11. The elastic mattress according to claim 9 and/or 10, **characterized in that**, a plurality of strips having pull buckles are disposed on a periphery of the one or more upper mattress layers, and the strips having pull buckles are buckled to lap joints or connecting members of peripheral pre-compressed springs of the one or more elastic modules.

12. The elastic mattress according to any one or more of claims 1-11, **characterized in that**, the one or more bottom layers are detachably spliced by a plurality of bottom layer units or are integrated structures.

13. The elastic mattress according to any one or more of claims 1 to 12, **characterized in that**: multiple of the one or more bottom layers are detachably spliced together to form a base for the one or more elastic modules.

14. The elastic mattress according to any one or more of claims 1 to 13, **characterized in that**, a third member is a connecting knob, a bottom of the connecting knob comprise a symmetrical T-shaped buckling pin, peripheries of the one or more bottom layer units or the bottom layers comprise sliding rails connected to the T-shaped buckling pin, and widths of the sliding rails narrow along a rotation direction of the connecting knob; the connecting knob is buckled to wide parts of the sliding rails on two adjacent ones of the bottom layer units or the one or more bottom layers, and the connecting knob rotates to enable the T-shaped buckling pin to be positioned at narrow parts of the sliding rails to achieve a connection of the two adjacent ones of the bottom layer units or the one or more bottom layers.

15. The elastic mattress according to any one or more of claims 1 to 14, in particular of claim 12, **characterized in that**, the pre-compressed springs are connected to the one or more bottom layers through fixing members, wherein preferably at least part of the one or more bottom layers is disposed with the fixing members, and/or wherein preferably: the fixing members are positioning protrusions disposed on the bottom layer units, lower end surfaces of the pre-compressed springs comprise cavities configured to be positioned at and cooperate with the positioning protrusions, and the pre-compressed springs are connected to the one or more bottom layers by a male-female connection between the positioning protrusions and the cavities.

16. The elastic mattress according to any one or more of claims 1 to 15, **characterized in that**, the pre-compressed springs comprise top covers and bottom covers, springs are disposed between the top covers and the bottom covers, positioning structures are disposed between the top covers and the bottom covers, and the top covers are buckled to the bottom covers through the positioning structures to compress the pre-compressed springs to the locked state.

17. The elastic mattress according to claim 16, **characterized in that**, first positioning structure are disposed on lower end surfaces of the top covers, second positioning structures are disposed on upper end surfaces of the bottom covers, and the first positioning structures are detachably buckled to the second positioning structures; the first positioning structures and the second positioning structures are buckled to each other to compress the pre-compressed springs and are detached from each other to release the pre-compressed springs.

18. An application of the elastic mattress, **characterized in that**, applying the elastic mattress according to any one or more of claims 1-17 in a sofa, a bed mattress, or a soft stool.
